# EUROPEAN PATENT SPECIFICATION

(11) **EP 2 267 945 B1**
(45) Date of publication and mention of the grant of the patent: **06.03.2013**
(21) Application number: 10002750.7
(22) Date of filing: 16.03.2010
(51) Int. Cl.: H04L 12/28, H04L 12/26, H04L 12/12, G06F 3/12

(54) **Administration device for collecting device status information**
Verwaltungsvorrichtung zur Erfassung der Gerätestatusinformation
Dispositif d'administration destiné à collecter des informations sur l'état d'un dispositif

(30) Priority: 23.06.2009 JP 2009148619
(43) Date of publication of application: 29.12.2010
(73) Proprietor: Brother Kogyo Kabushiki Kaisha, Nagoya-shi, Aichi-ken 467-8561 (JP)
(72) Inventor: Ishimoto, Kan, Nagoya-shi Aichi-ken 467-8561 (JP)
(74) Representative: Kuhnen & Wacker

(56) References cited:
- WO-A1-2006/134782
- US-A1- 2008 309 965
- US-A1- 2009 287 855

## Description

The present specification discloses an administration device that acquires information from each of a plurality of devices.

An administration device which administers a plurality of devices (e.g. a printer, etc.) connected with a network is known (for example, Japanase patent application publication NO. 2005-202449). The administration device periodically executes an information acquisition process for sequentially acquiring target information, e.g., regarding remaining toner, name of print job being executed, etc, from the plurality of devices by sequentially making a request for the target information.

Patent application US 2008/0309965 A1 discloses a printer discovering method.

The above administration device makes a request for the target information to a specific device regardless of the status of the specific device at the time of requesting the target information. Consequently, the administration device has made the request for the target information to the specific device even though this requesting action was unnecessary. Further, the request for the target information to the specific device was poorly timed, such that the target information could not be acquired quickly from the specific device. Since the status of the specific device was not taken into consideration, it was difficult to acquire information appropriately from the specific device.

In the present specification, an administration device is taught which requests information in accordance with a status of a device.

One aspect of techniques disclosed in the present specification is an administration device to be connected in a communicable manner with a plurality of devices including a first device and a second device. The administration device may comprise an information acquisition unit configured to execute an information acquisition process for sequentially acquiring information from the plurality of devices by sequentially making a request for the information to the plurality of devices.

The information acquisition unit may be configured to make a request for status information to the first device, (a) if the status information of the first device does not indicate a sleeping status, make a request for target information other than the status information to the first device, and make a request for the status information to the second device after having made the request for the target information to the first device, (b) if the status information of the first device indicates the sleeping status, make the request for the status information to the second device without making the request for the target information to the first device.

According to the above configuration, when the target information is to be acquired, the administration device acquires the target information from the first device when the first device is not in the sleeping status. When the first device is in the sleeping status, the target information of the first device might not have changed from the target information acquired in a previous request. Consequently, when the status of the first device is the sleeping status, the administration device does not make the request for the target information to the first device. Consequently, unnecessary request to the first device for unchanged target information can be inhibited. Information can be requested in accordance with the status of the device.

Alternatively, the information acquisition unit may be configured to make a request for status information to the first device, (a) if the status information of the first device does not indicate a process executing status, make a request for target information other than the status information to the first device, and make a request for the status information to the second device after having made the request for the target information to the first device; and (b) if the status information of the first device indicates the process executing status, make the request for the status information to the second device without making the request for the target information to the first device.

According to the above configuration, when the target information is to be acquired, the administration device acquires the target information from the first device when the first device is not in the process executing status (a status in which a processing load is low). When the first device is in the process executing status (a status in which the processing load is high), even though the request for the target information has been made to the first device, a long period might be needed before the target information is acquired from the first device. Consequently, when the first device is in the process executing status, the administration device does not make the request for the target information to the first device. It is thus possible to prevent from making the request for the target information to the first device when this is likely to take a long period to respond. The request for information can be made in accordance with the status of the device.

In the administration device, (a') if the status information of the first device does not indicate the sleeping status, and the status information of the first device does not indicate a process executing status, the information acquisition unit may make the request for the status information to the second device after having made the request for the target information to the first device.

According to this configuration, when the status of the first device is neither the sleeping status nor the process executing status, the administration device acquires the target information from the first device. Making the request for unchanged target information to the first device can be prevented, and it is possible to prevent from making the request for the target information to the first device when this is likely to take a long period to respond.

The target information may include information which is changed as the first device executes a process. Alternatively, the target information may include information which is not changed as the first device executes a process.

The administration device may further comprise a standby period information acquisition unit and a time cycle setting unit. The information acquisition unit may execute the information acquisition process periodically in a predetermined time cycle. The standby period information acquisition unit may acquire, from each of the plurality of devices, information related to a standby period, wherein the standby period of each of the plurality of devices is a time period from a time that a process executing status is finished until transiting to the sleeping status via a standby status. The time cycle setting unit may be configured to set the predetermined time cycle to be equal to or shorter than the shortest one of a plurality of standby periods of the plurality of devices.

Further, the administration device may further comprise a standby period setting unit configured to send, to the plurality of devices, a setting instruction for setting a standby period to a predetermined time period. In this case, the information acquisition unit may execute the information acquisition process periodically in a predetermined time cycle that is equal to or longer than the predetermined time period.

The following situation could occur in a case where a standby period of a specific device from which the administration device will acquire target information is shorter than the predetermined time cycle for executing the information acquisition process. The specific device may transit to the process executing status from the sleeping status, then return to the sleeping status via the standby status during one time cycle for executing the information acquisition process. In this case, the target information is not acquired from the specific device during the former sleeping status, and is also not acquired from the specific device during the latter sleeping status. When the specific device transits to the process executing status, the target information of the specific device may change. Even though the target information has changed, an undesirable situation in which the changed target information might not be acquired from the specific device may occur during the latter sleeping status. In the aforementioned administration device, the standby period of each of the plurality of devices is equal to or longer than the predetermined time cycle for executing the information acquisition process. Consequently, the above situation does not occur. If there has been a change in the target information of the device from which the administration device will acquire the target information, the changed target information can be acquired reliably.

Other aspects of techniques disclosed in the present specification may provide a control method, a computer program for realizing the administration device, and a computer readable medium storing the computer program that are novel and have utility. Further, another aspect of techniques disclosed in the present specification may provide a system including the administration device, the first device, and the second device that is novel and has utility.

(1) It may happen that the target information of a device indicating error status does not change until the error status is eliminated. Consequently, if the status information of the first device does not indicate the error status, the information acquisition unit may make a request for target information other than the status information to the first device and then make a request for the status information to the second device. If the status information of the first device indicates the error status, the information acquisition unit may make the request for the status information to the second device without making the request for the target information to the first device. The error status may include a paper out status and a toner or ink out status. (2) The administration device may allow a user to select one mode among a first mode wherein the time cycle setting unit sets the predetermined time cycle, and a second mode wherein the standby period setting unit sets the standby period of the plurality of devices to the predetermined time period.

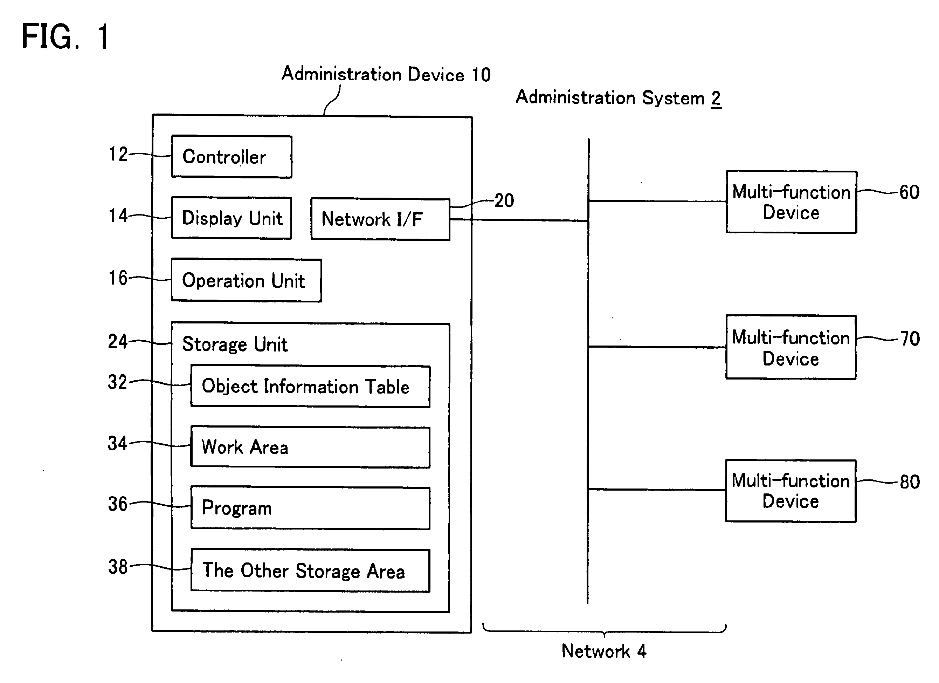

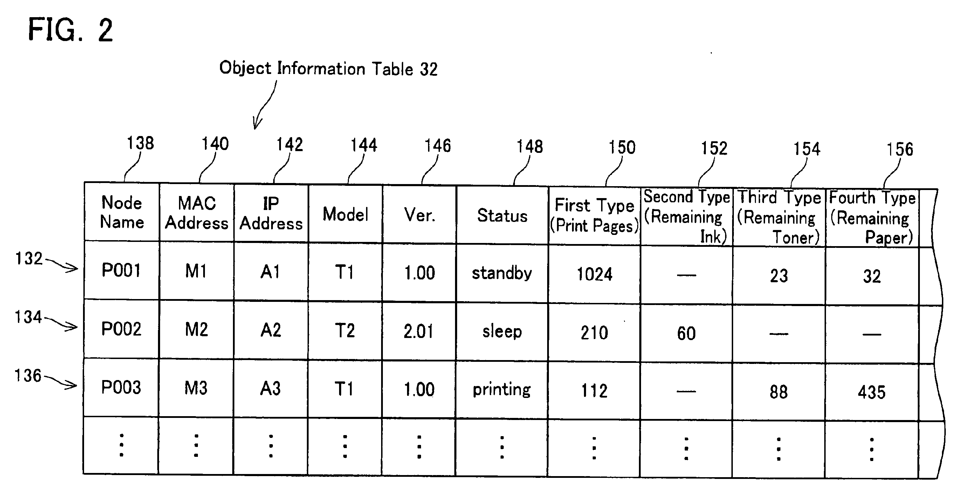

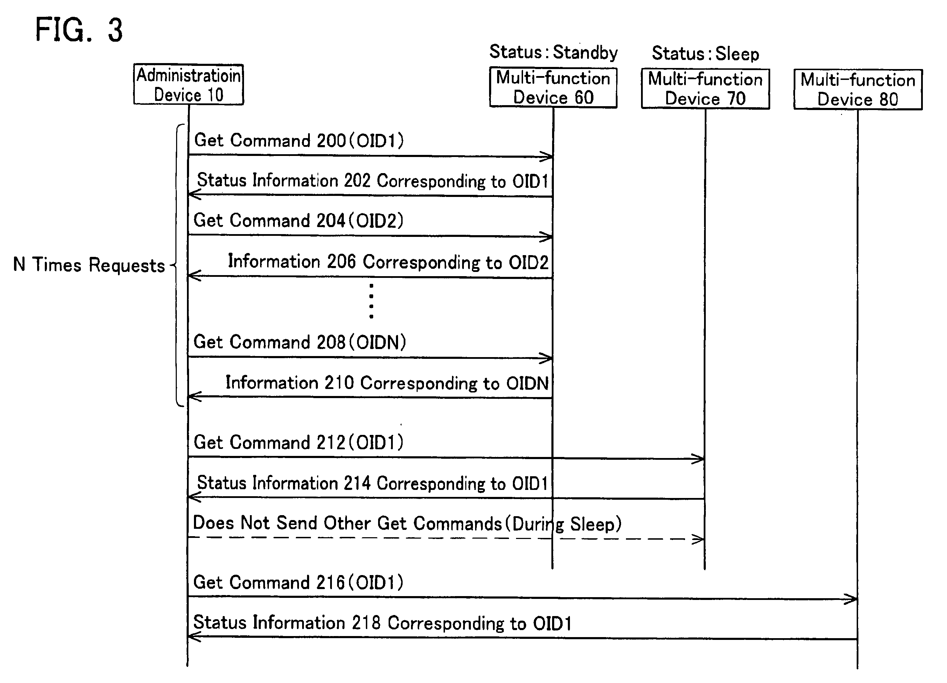

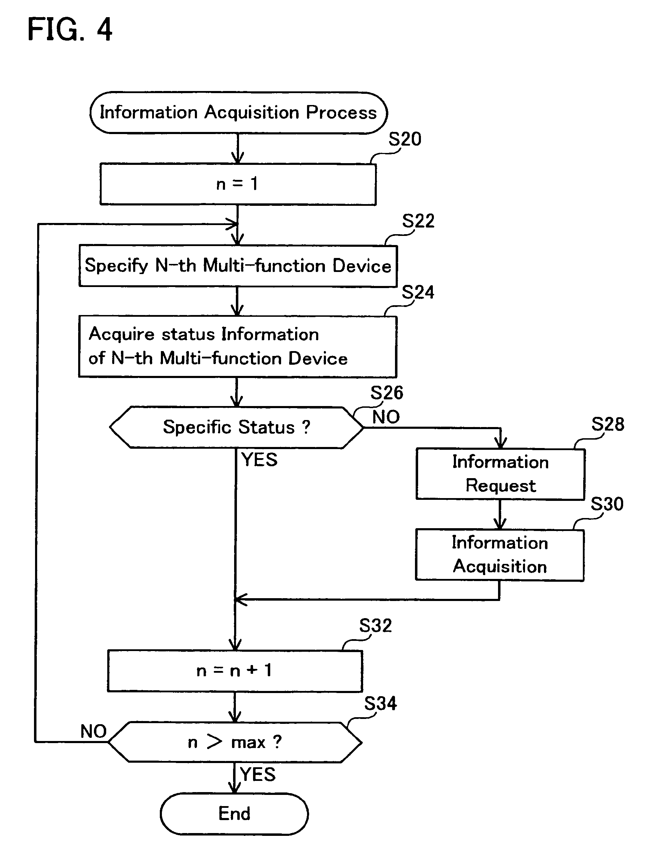

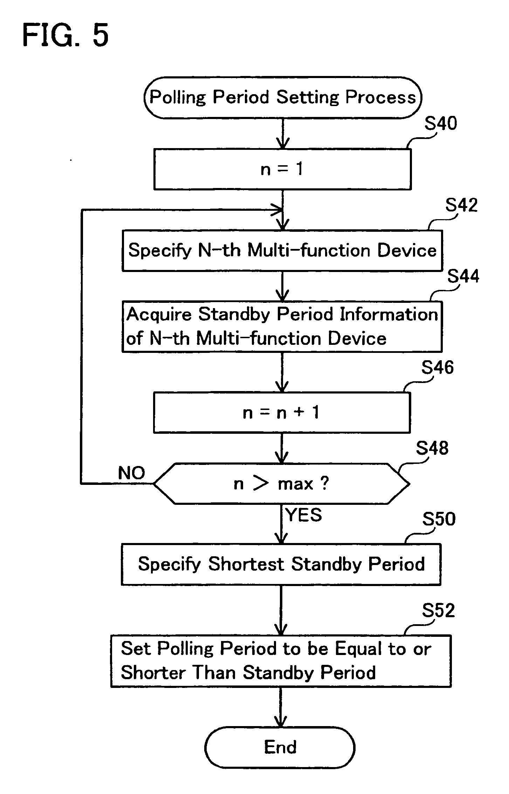

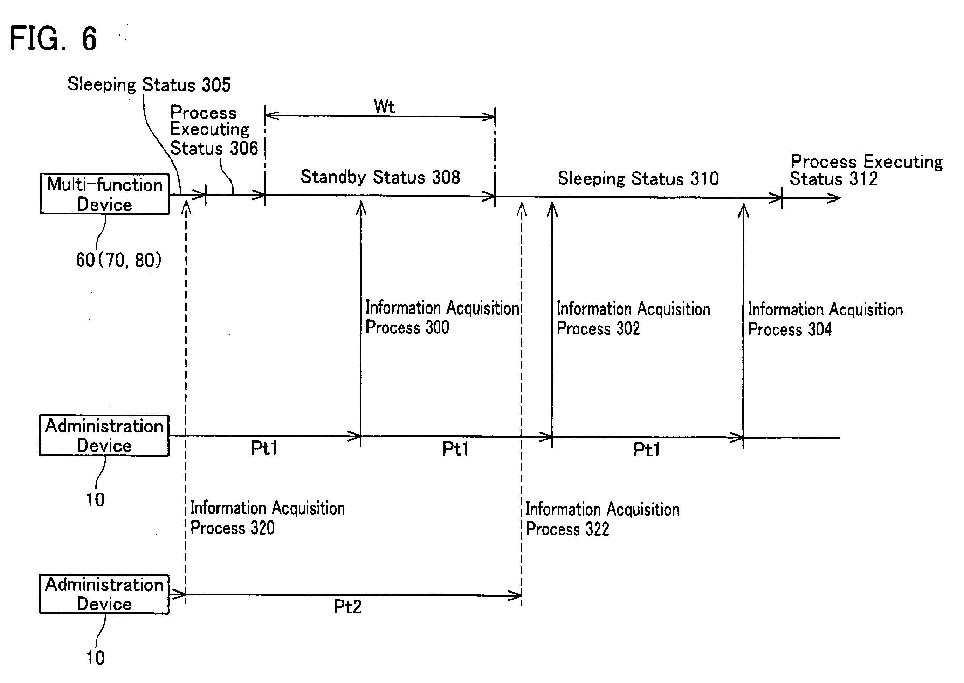

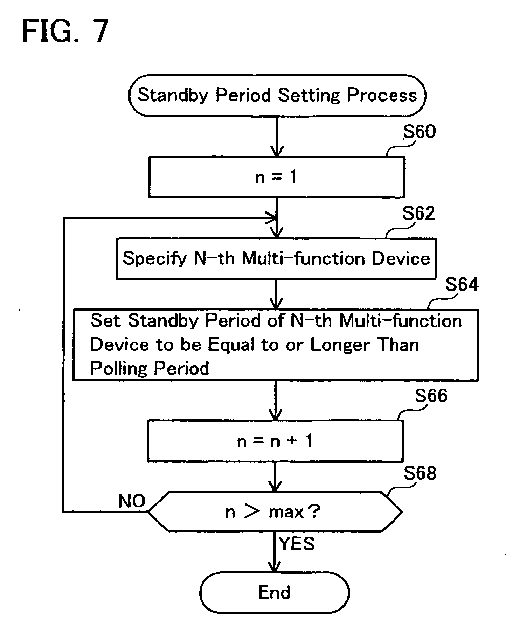

Fig. 1 shows a configuration of an administration system of a first embodiment. Fig. 2 shows an example of an target information table. Fig. 3 shows a sequence view of processes executed by each device. Fig. 4 shows a flowchart of an information acquisition process. Fig. 5 shows a flowchart of a polling period setting process. Fig. 6 shows a time chart of processes executed by each device. Fig. 7 shows a flowchart of a standby period setting process in a second embodiment.

The invention is carried out by the device of independent claims 1 and 6 and by the program of independent claims 9 and 10.

### (First Embodiment)

### (Configuration of system)

The first embodiment will be explained with reference to Figs. 1 to 6. An administration system 2 comprises a network 4 including a LAN, etc., an administration device 10, a plurality of multi-function devices 60, 70, 80, etc. The devices 10, 60, 70, 80 are all connected with the network 4. The devices 10, 60, 70, 80 can communicate with each other via the network 4. The multi-function devices 60, etc. comprise a printing function, scanning function, fax communication function, etc.

### (Configuration of the administration device)

The configuration of the administration device 10 will be explained in detail. In the present embodiment, an example will be explained using a PC as the administration device 10. The administration device 10 administers the multi-function devices 60, etc. by executing processes to acquire information therefrom.

The administration device 10 comprises a controller 12, display unit 14, operation unit 16, network interface 20, and storage unit 24. The controller 12 executes processes in accordance with a program 36 stored in the storage unit 24. The display unit 14 displays a variety of information. The operation unit 16 comprises a plurality of keys. A user can input various instructions to the administration device 10 by operating the operation unit 16. The network interface 20 is connected with the network 4.

The storage unit 24 stores a target information table 32 (Fig. 2). The storage unit 24 comprises a work area 34. The work area 34 stores information created or acquired by the controller 12 executing processes. The storage unit 24 stores the program 36 to be executed by the controller 12. The program 36 is installed in the storage unit 24 from a computer readable medium which records the program 36 to be executed by the controller 12. Alternatively, the program 36 need not be installed from the computer readable medium, but may be downloaded from an exterior source. The storage unit 24 further has another storage area 38 for storing information other than the information 32, 36 (e.g., information acquisition polling period (described later in detail), etc.).

A target information table 32 exemplified in Fig.2 includes a plurality of combination information 132 to 136. The combination information 132 to 136 is information in which the following are associated: node name 138, MAC address 140, IP address 142, model information 144, firmware version information 146, status information 148, and a plurality of types of dynamic information 150, 152, 154, 156. The combination information 132, etc. indicates information relating to the multi-function devices 60, etc., which are administered by the administration device 10.

If the combination information 132 is information relating to the multi-function device 60, the multi-function device 60 has node name "P001", MAC address "M1", and IP address "A1" included in the combination information 132. Further, the multi-function device 60 is a device with the model information "T1", and operates in accordance with a firmware having a firmware version information "1.00". The status information 148 is information indicating status of the multi-function devices 60, etc. The status of the multi-function devices 60, etc. includes a process executing status in which a process is being executed, a standby status (waiting status) in which the multi-function device is on standby and able to execute a process, a sleeping status which has lower power consumption than the standby status (lower power consumption than the process executing status), an error status in which an error has occurred, etc. The process executing status includes various types of status of the multi-function devices 60, etc., such as printing executing status in which printing is executed, scanning status in which scanning is executed, etc. Further, the error status includes various types of status, such as a status in which the toner or ink for printing is empty, or in which the printing paper is out, etc. The error status is a status in which the multi-function devices 60, etc. cannot execute a specific process (printing process, scanning process, etc.).

A plurality of types of dynamic information 150, etc. is information whose value (or quantity) changes as the multi-function devices 60, etc. execute a process. The dynamic information 150, etc. includes e.g., information relating to a number of print pages that is the total number of printed pages, information relating to the quantity of consumable items (remaining ink etc.), etc. If the combination information 132 is information of the multi-function device 60, the multi-function device 60 has "1024" as the first type of dynamic information (print pages). Further, the multi-function device 60 of the present embodiment prints using toner, not ink. Consequently, the multi-function device 60 does not have the second type of dynamic information (regarding remaining ink), but has the third type of dynamic information (regarding remaining toner). The multi-function device 60 cannot respond to a request for the second type of dynamic information which it does not have.

### (Outline of processes executed by administration device and multi-function device)

A brief explanation will be given of the processes executed by the administration device 10 and the multi-function devices 60, etc. Fig. 3 shows a sequence view of the processes executed by the administration device 10 and the multi-function devices 60, 70, 80. In the example of Fig. 3, the status of the multi-function device 60 is standby status, and the status of the multi-function device 70 is sleeping status. The status of the multi-function device 80 is not indicated.

In the present embodiment, the administration device 10 and the multi-function devices 60, 70, 80 communicate in accordance with an SNMP (Simple Network Management Protocol). The administration device 10 is equivalent to an SNMP manager, and the multi-function devices 60, 70, 80 are equivalent to SNMP agents. The administration device 10 requests information by sending a Get command to the multi-function devices 60, 70, 80. This Get command includes an object identifier (termed "OID (Object Identifier)" below) for identifying information.

When an information acquisition polling period has elapsed, the administration device 10 starts an information acquisition process as exemplified in Fig. 3. The administration device 10 requests the status information of the multi-function device 60 by sending a Get command 200 to the multi-function device 60. The Get command 200 includes one OID 1 corresponding to the status information. As a result thereof, the multi-function device 60 sends status information 202 corresponded to the OID 1 to the administration device 10. In the present example, the multi-function device 60 sends status information indicating standby status to the administration device 10. In the case where the status information of the multi-function device that is a destination of the status information request is none of sleeping status, process executing status, and error status, the administration device 10 makea a request for information (target information) whose purpose is other than the status information to the multi-function device. Consequently, the administration device 10 sends a Get command 204 including one OID 2 corresponding to information (e.g. print pages) other than the status information to the multi-function device 60. If the multi-function device 60 has information 206 corresponding to the OID 2 (if the multi-function device 60 can respond), the multi-function device 60 sends the information 206 to the administration device 10. Although not shown in Fig. 3, if the multi-function device 60 does not have the information 206 corresponding to the OID 2 (if the multi-function device 60 cannot respond), the multi-function device 60 sends a response indicating it cannot respond to the administration device 10 (alternatively, it may not send a response to the administration device 10). Next, the administration device 10 requests one other type of information (e.g. remaining ink) by sending a Get command to the multi-function device 60. If N types of information that the administration device 10 can request are present (N being an integer of two or more), the administration device 10 sequentially sends N number of Get commands 200, 204, 208, etc. to the multi-function device 60 and acquires, from the multi-function device 60, the information 202, 206, 210, etc. for which the multi-function device 60 is capable of responding.

The method for the administration device 10 to acquire information from the multi-function device 60 is not restricted to sending a Get command including one OID repeatedly over N times to the multi-function device 60, as in the above example. Aside from the status information, if the administration device 10 knows other types of information for which the multi-function device 60 is capable of responding, a Get command including all OIDs corresponding to those types of information may be sent at once to the multi-function device 60, and the information of the aforesaid other types may be acquired altogether.

After acquiring the status information 202 and other target information 206, 210, etc. from the multi-function device 60, the administration device 10 sends a Get command 212 including one OID 1 corresponding to the status information to the multi-function device 70. The multi-function device 70 sends status information 214 corresponded to the OID 1 to the administration device 10. In the present example, the status information of the multi-function device 70 is sleeping status. In the case where the status information of the multi-function device that is a destination of the status information request is one of sleeping status, process executing status, and error status, the administration device 10 does not make a request for information other than the status information to that multi-function device. Consequently, the administration device 10 does not send a Get command requesting information whose purpose is other than the status information to the multi-function device 70. Next, the administration device 10 sends a Get command 216 including one OID 1 corresponding to status information to the multi-function device 80. The multi-function device 80 sends status information 218 corresponded to the OID 1 to the administration device 10. As in the case of the multi-function devices 60, 70, the administration device 10 determines whether to further make a request for information other than the status information to the multi-function device 80 based on the status information 218 of the multi-function device 80.

### (Process executed by the administration device 10)

Next, the contents of a process executed by the controller 12 of the administration device 10 will be explained with reference to Fig. 4. When a power source of the administration device 10 is turned ON, the controller 12 monitors the progress of the information acquisition polling period. If the information acquisition polling period has elapsed, the controller 12 starts the information acquisition process. In the information acquisition process, the controller 12 acquires the IP addresses of the plurality of multi-function devices 60, etc. connected with the network 4 by broadcasting a predetermined command (not shown). First, the controller 12 sets n=1 (S20). Next, the controller 12 specifies the IP address of the n-th multi-function device from the IP addresses of the plurality of multi-function devices 60, etc. (S22). The controller 12 makes a request for the status information to the n-th multi-function device by sending a Get command to the IP address of the n-th multi-function device. Consequently, the controller 12 acquires the status information from the n-th multi-function device (S24). Upon acquiring the status information, the controller 12 determines whether the acquired status information is a specific status (S26). The specific status includes the sleeping status, process executing status, and error status. If the answer is YES in S26, the controller 12 continues to S32 without making a request for further information to the n-th multi-function device.

If the answer is NO in S26, the controller 12 sequentially sends, to the n-th multi-function device, Get commands including OIDs corresponding to a variety of information other than the status information (S28). The n-th multi-function device sends information for which it is capable of responding to the administration device 10. Consequently, the administration device 10 acquires the information (S30). The acquired information includes the dynamic information 150 to 156 shown in Fig. 2. Upon ending S30, the controller 12 continues to S32.

In S32, the controller 12 increments the number n by one, and determines n+1 to be the new n. When the new n has been determined, the controller 12 determines whether the new n is greater than the total (maximum) number of the IP addresses of the plurality of multi-function devices 60, etc. acquired by the aforementioned broadcast (S34). If the answer is NO in S34, the controller 12 returns to S22, specifies the newly specified n-th device, and repeats the processes S22 to S34. If the answer is YES in S34, the controller 12 ends the information acquisition process.

As described above, the information acquisition process of Fig. 4 is executed each time the information acquisition polling period elapses. The contents of a process for the controller 12 to set the information acquisition polling period will be explained with reference to Fig. 5. The polling period setting process is executed e.g., each time the power source of the administration device 10 is turned ON. However, the polling period setting process may be executed, e.g., in accordance with an instruction from the user. As with the information acquisition process, the controller 12 acquires the IP addresses of the plurality of multi-function devices 60, etc. by broadcasting a predetermined command. The controller 12 sets n=1 (S40), and specifies the IP address of the n-th multi-function device (S42). Next, the controller 12 sends, to the IP address of the n-th multi-function device, a Get command including an OID corresponding to standby period information. The standby period information is information related to a standby period after the process executing status is finished to when the n-th multi-function device transits to the sleeping status via the standby status. The n-th multi-function device sends the standby period information to the administration device 10. Consequently, the controller 12 acquires the standby period information (S44). S46 and S48 executed after S44 are identical to S32 and S34 of Fig. 4.

If the answer is YES in S48, the controller 12 specifies the shortest standby period from the standby period information of the multi-function devices 60, etc. acquired in S44 (S50). Next, the controller 12 sets polling period for acquiring the information from the multi-function devices 60, etc. to be a specific value equal to or less than (shoter than)the specified standby period (S52). The controller 12 stores the specific value (i.e., polling period) in the storage area 38 (see Fig. 1). Later, the controller 12 monitors that the polling period stored in the storage area 38 has elapsed, and executes the information acquisition process of Fig. 4 each time the polling period has elapsed.

As shown in Fig. 6, upon receiving a process executing instruction (e.g. printing instruction, scanning instruction, information displaying instruction, etc.) during a sleeping status 305, the multi-function device 60 transits to a process executing status 306. Upon ending the process executing status 306, the multi-function device 60 transits to a standby status 308. If, after transiting to the standby status 308, a predetermined time period (Wt) continues during which the process executing instruction is not received, the multi-function device 60 transits to a sleeping status 310. Although not shown, if the process executing instruction is received during the standby status 308, the multi-function device 60 transits back to a process executing status. The sleeping status 310 continues until the process executing instruction is received. Upon receiving the process executing instruction during the sleeping status 310, the multi-function device 60 transits to a process executing status 312.

Each time the polling period (Pt1) set in S52 of Fig. 5 has elapsed, the administration device 10 executes the information acquisition processes 300, 302, 304 shown in Fig. 4 for the multi-function device 60. In the present embodiment, the polling period (Pt1) and the standby period (Wt) of the multi-function device 60 are set by the polling period setting process shown in Fig. 5 to satisfy the relationship Pt1≤Wt. The standby period of the other multi-function devices 70, etc. is also equal to or more than (longer than) the polling period (Pt1).

The case where the polling period has been set to Pt2 shown in Fig. 6 will now be considered. This polling period (Pt2) is set to be longer than the standby period (Wt) (Pt2>Wt). The administration device 10 executes the information acquisition processes 320, 322 for the multi-function device 60 each time the information acquisition polling period (Pt2) has elapsed. In this case, the multi-function device 60 is in the sleeping statuses 305, 310 at both occasions when the administration device 10 executes the information acquisition processes 320, 322. However, during the polling period (Pt2), the multi-function device 60 transits from the sleeping status 305 to the process executing status 306, then transits back to the sleeping status 310 via the standby status 308. In the process executing status 306, it is likely that the dynamic information (e.g. print pages, remaining toner, etc.) of the multi-function device 60 will change. Nevertheless, the administration device 10 cannot acquire, in the information acquisition process 322, the dynamic information that has changed during the process executing status 306.

To deal with this, in the present embodiment, the information acquisition polling period (Pt1) has been set to be equal to or shorter than the standby period (Wt). Consequently, during two successive information acquisition processes, the situation does not occur, of the multi-function device 60 transiting from the sleeping status to the process executing status, and then transiting back to the sleeping status via the standby status. Consequently, the administration device 10 can reliably acquire, in the information acquisition process 300, the dynamic information that has changed during the process executing status 306.

The administration device 10 of the present embodiment has been explained in detail above. In the administration device 10 of the present embodiment, as shown in Fig. 3, the administration device 10 makes the request for the information other than the status information to the multi-function device 60 in the case where the status of the multi-function device 60 is in none of the specific statuses (i.e., the sleeping status, process executing status, and error status). Further, in the case where the status of the multi-function device 70 is in the specific status, the administration device 10 proceeds to make the request for the status information to the other multi-function device 80 without further making the request for the information other than the status information to the multi-function device 70. If the status of the multi-function device 70 is in the sleeping status, it is likely that the dynamic information of the multi-function device 70 has not changed from that acquired by the previous request. Further, if the multi-function device 70 is in the error status, also, it is likely that the dynamic information of the multi-function device 70 has not changed from that acquired by the previous request. According to the present embodiment, unnecessary request of unchanged dynamic information to the multi-function device 70 can be prevented. Further, if the multi-function device 70 is in the process executing status (having a high processing load), it is likely that a long period is needed to respond to the request. It is possible to prevent sending a request to the multi-function device 70 that is likely to need a long period of time before responding. The administration device 10 of the present embodiment can request information in accordance with the status of the multi-function devices 60, 70, 80.

### (Second Embodiment)

The second embodiment will be explained with reference to Fig. 7. In the first embodiment, as shown in Fig. 5, the administration device 10 sets its information acquisition polling period according to the standby period of the multi-function devices 60, etc. By contrast, in the present embodiment, the information acquisition polling period of the administration device 10 is fixed, and the administration device 10 sets the standby period of the multi-function devices 60, etc. according to its own information acquisition polling period. Moreover, the information acquisition polling period may be a default value, or may be a value set by the user.

As shown in Fig. 7, the standby period setting process is executed, e.g., each time the power source of the administration device 10 is turned ON. However, the standby period setting process may, e.g., be executed in accordance with an instruction from the user. The processes S60 and S62 are identical to the processes S20 and S22 of Fig. 4. In S64, the controller 12 determines a specific value equal to or more than (longer than) the fixed information acquisition polling period. Next, the controller 12 sets the standby period of the n-th multi-function device to the determined specific value. Specifically, the controller 12 sends, to the n-th multi-function device, a Set command including the specific value and an OID corresponding to the standby period. S66 and S68 executed after S64 are identical to S32 and S34 of Fig. 4.

According to the administration device 10 of the present embodiment, as shown in S62 to S68 (Fig. 7), the standby period of the multi-function devices 60, etc. is set to be equal to or longer than the polling period of the administration device 10. Consequently, as with the case of the first embodiment, if the dynamic information of the multi-function devices 60, etc. has changed, the administration device 10 can reliably acquire the changed dynamic information.

As is clear from the above explanation, the multi-function devices 60, 70, 80 are examples of "a plurality of devices". The information whose purpose is other than status information is an example of "target information". The polling period (Pt1) is an example of "predetermined time cycle". The information acquisition process of Fig. 4, the processes S40 to S48 of Fig. 5, the processes S50 and S52 of Fig. 5, and the standby period setting process of Fig. 7 are each an example of processes executed by "information acquisition unit", "standby period information acquisition unit", "time cycle setting unit", and "standby period setting unit", respectively.

Variants of the above embodiments are given below. In the embodiments, an example was explained wherein the sleeping status, process executing status, and error status illustrate the specific status, and information other than the status information is requested to the multi-function devices 60, etc. if none of these states are applicable. However, the specific status is not restricted to these three statuses. E.g., the specific status may be only one or two from among the sleeping status, process executing status, and error status.

In the embodiments, the administration device 10 was explained that is capable of executing only one of the polling period setting process (first embodiment) and the standby period setting process (second embodiment). However, the administration device 10 may be capable of executing both the polling period setting process and the standby period setting process. In that case, the user may be capable of selecting one mode from among a mode for executing the polling period setting process and a mode for executing the standby period setting process.

## Claims

1. An administration device (10) configured to be connected in a communicable manner with a plurality of devices (60, 70, 80) including a first device (60, 70) and a second device (70, 80), the administration device (10) comprising:
an information acquisition unit (12) configured to execute an information acquisition process for sequentially acquiring information from the plurality of devices (60, 70, 80) by sequentially making a request for the information to the plurality of devices (60, 70, 80), wherein the information acquisition unit (12) is configured to:
make a request for status information to the first device (60, 70);
**characterised by**
(a) if the status information of the first device (60) does not indicate a sleeping status, make a request for target information other than the status information to the first device (60), and make a request for the status information to the second device (70) after having made the request for the target information to the first device (60); and
(b) if the status information of the first device (70) indicates the sleeping status, make the request for the status information to the second device (80) without making the request for the target information to the first device (70).

2. The administration device (10) as in claim 1, wherein
(a') if the status information of the first device (60) does not indicate the sleeping status and the status information of the first device (60) does not indicate a process executing status, the information acquisition unit (12) makes the request for the target information to the first device (60), and make the request for the status information to the second device (70) after having made the request for the target information to the first device (60).

3. The administration device (10) as in claim 1 or 2, wherein
the target information includes information (150, 152, 154, 156) which is changed as the first device (60, 70) executes a process.

4. The administration device (10) as in any one of claims 1 to 3, further comprising:
a standby period information acquisition unit (12); and
a time cycle setting unit (12),
wherein the information acquisition unit (12) is configured to execute the information acquisition process periodically in a predetermined time cycle (Pt1),
the standby period information acquisition unit (12) acquires, from each of the plurality of devices (60, 70, 80), information related to a standby period (Wt), wherein the standby period (Wt) of each of the plurality of devices (60,70,80) is a time period from a time that a process executing status is finished until transiting to the sleeping status via a standby status, and
the time cycle setting unit (12) sets the predetermined time cycle (Pt1) to be equal to or shorter than the shortest one of a plurality of standby periods (Wt) of the plurality of devices (60, 70, 80).

5. The administration device (10) as in any one of claims 1 to 3, further comprising:
a standby period setting unit (12) configured to send, to the plurality of devices (60,70,80), a setting instruction for setting a standby period (Wt) to a predetermined time period, wherein the standby period (Wt) is a time period from a time that a process executing status is finished until transiting to the sleeping status via a standby status,
wherein the information acquisition unit (12) executes the information acquisition process periodically in a predetermined time cycle (Pt1) that is equal to or longer than the predetermined time period.

6. An administration device (10) configured to be connected in a communicable manner with a plurality of devices (60, 70, 80) including a first device (60, 70) and a second device (70, 80), the administration device (10) comprising:
an information acquisition unit (12) configured to execute an information acquisition process for sequentially acquiring information from the plurality of devices (60, 70, 80) by sequentially making a request for the information to the plurality of devices (60, 70, 80), wherein
the information acquisition unit (12) is configured to:
make a request for status information to the first device (60, 70);
**characterised by**
(a) if the status information of the first device (60) does not indicate a process executing status, make a request for target information other than the status information to the first device (60), and make a request for the status information to the second device (70) after having made the request for the target information to the first device (60); and
(b) if the status information of the first device (70) indicates the process executing status, make the request for the status information to the second device (80) without making the request for the target information to the first device (70).

7. The administration device (10) as in claim 6, wherein
(a') if the status information of the first device (60) does not indicate the process executing status and the status information of the first device (60) does not indicate a sleeping status, the information acquisition unit makes the request for the target information to the first device (60), and make the request for the status information to the second device (70) after having made the request for the target information to the first device (60).

8. The administration device (10) as in claim 6 or 7, wherein
the first device (60, 70) comprises a printing function, and
the process executing status includes a print executing status.

9. A computer program (36) for an administration device (10) configured to be connected in a communicable manner with a plurality of devices (60, 70, 80) including a first device (60, 70) and a second device (70, 80),
the computer program (36) including instructions for ordering a computer mounted on the administration device (10) to execute:
an information acquisition process for sequentially acquiring information from the plurality of devices (60, 70, 80) by sequentially making a request for the information to the plurality of devices (60, 70, 80),
wherein the information acquisition process includes:
making a request for status information to the first device (60, 70);
**characterised by**
(a) if the status information of the first device (60) does not indicate a sleeping status, making a request for target information other than the status information to the first device (60), and making a request for the status information to the second device (70) after having made the request for the target information to the first device (60); and
(b) if the status information of the first device (70) indicates the sleeping status, making the request for the status information to the second device (80) without making the request for the target information to the first device (70).

10. A computer program (36) for an administration device (10) configured to be connected in a communicable manner with a plurality of devices (60, 70, 80) including a first device (60, 70) and a second device (70, 80),
the computer program (36) including instructions for ordering a computer mounted on the administration device (10) to execute:
an information acquisition process for sequentially acquiring information from the plurality of devices (60, 70, 80) by sequentially making a request for the information to the plurality of devices (60, 70, 80),
wherein the information acquisition process includes:
making a request for status information to the first device (60, 70);
**characterised by**
(a) if the status information of the first device (60) does not indicate a process executing status, making a request for target information other than the status information to the first device (60), and making a request for the status information to the second device (70) after having made the request for the target information to the first device (60); and
(b) if the status information of the first device (70) indicates the process executing status, making the request for the status information to the second device (80) without making the request for the target information to the first device (70).

## Patentansprüche

1. Administrationsvorrichtung (10), die dafür konfiguriert ist, in einer kommunikativen Art und Weise mit einer Mehrzahl von Vorrichtungen (60, 70, 80) einschließlich einer ersten Vorrichtung (60, 70) und einer zweiten Vorrichtung (70, 80) verbunden zu werden, wobei die Administrationsvorrichtung (10) aufweist:
eine Informationserfassungseinheit (12), die konfiguriert ist zum Ausführen eines Informationserfassungsverfahrens zum sequentiellen Erfassen von Information von der Mehrzahl von Vorrichtungen (60, 70, 80) durch sequentielles Stellen einer Anforderung nach Information an die Mehrzahl von Vorrichtungen (60, 70, 80), wobei die Informationserfassungseinheit (12) konfiguriert ist zum:
Stellen einer Anforderung nach Zustandsinformation an die erste Vorrichtung (60, 70);
**gekennzeichnet durch**
(a) wenn die Zustandsinformation der ersten Vorrichtung (60) keinen Schlafzustand anzeigt, Stellen einer Anforderung nach Zielinformation, die eine andere ist als die Zustandsinformation, an die erste Vorrichtung (60), und Stellen einer Anforderung nach Zustandsinformation an die zweite Vorrichtung (70) nachdem die Anforderung nach Zielinformation an die erste Vorrichtung (60) gestellt wurde; und
(b) wenn die Zustandsinformation der ersten Vorrichtung (70) den Schlafzustand anzeigt, Stellen der Anforderung nach Zustandsinformation an die zweite Vorrichtung (80) ohne Stellen der Anforderung nach Zielinformation an die erste Vorrichtung (70).

2. Administrationsvorrichtung (10) nach Anspruch 1, wobei
(a') wenn die Zustandsinformation der ersten Vorrichtung (60) keinen Schlafzustand anzeigt und die Zustandsinformation der ersten Vorrichtung (60) keinen Verfahrensausführzustand anzeigt, die Informationserfassungseinheit (12) die Anforderung nach Zielinformation an die erste Vorrichtung (60) stellt, und die Anforderung nach Zustandsinformation an die zweite Vorrichtung (70) stellt, nachdem sie die Anforderung nach Zielinformation an die erste Vorrichtung (60) gestellt hat.

3. Administrationsvorrichtung (10) nach Anspruch 1 oder 2, wobei
die Zielinformation Information (151, 152, 154, 156) enthält, die geändert wird, wenn die erste Vorrichtung (60, 70) ein Verfahren ausführt.

4. Administrationsvorrichtung (10) nach einem der Ansprüche 1 bis 3, weiter aufweisend:
Eine Standby-Zeitspannen-Informationserfassungseinheit (12); und
eine Zykuszeiteinstelleinheit (12),
wobei die Informationserfassungseinheit (12) konfiguriert ist zum Ausführen des Informationserfassungsverfahrens periodisch mit einer vorbestimmten Zykluszeit (Pt1),
die Standby-Zeitspannen-Informationserfassungseinheit (12) von jeder der Mehrzahl von Vorrichtungen (60, 70, 80) auf eine Standby-Zeitspanne (Wt) bezogene Information erfasst, wobei die Standby-Zeitspanne (Wt) jeder der Mehrzahl von Vorrichtungen (60, 70, 80) eine Zeitspanne von einer Zeit ist, zu der ein Verfahrensausführzustand beendet wird, bis zum Übergehen in den Schlafzustand über einen Standby-Zustand, und
die Zykluszeiteinstelleinheit (12) der vorbestimmten Zykluszeit (Pt1) derart einstellt, dass sie gleich oder kürzer als die kürzeste einer Mehrzahl von Standby-Zeitspannen (Wt) der Mehrzahl von Vorrichtungen (60, 70, 80) ist.

5. Administrationsvorrichtung (10) nach einem der Ansprüche 1 bis 3, weiter aufweisend:
eine Standby-Zeitspannen-Einstelleinheit (12), die dazu konfiguriert ist, an die Mehrzahl von Vorrichtungen (60, 70, 80) eine Einstellanweisung zum Einstellen einer Standby-Zeitspanne (Wt) auf eine vorbestimmte Zeitspanne zu senden, wobei die Standby-Zeitspanne (Wt) eine Zeitspanne ist von einer Zeit, zu der ein Verfahrensauführzustand beendet wird, bis zum Übergehen in den Schlafzustand über einen Standby Zustand,
wobei die Informationserfassungseinheit (12) das Informationserfassungsverfahren periodisch mit einer vorbestimmten Zykluszeit (Pt1) erfasst, die gleich oder länger ist als die vorbestimmte Zeitspanne.

6. Administrationsvorrichtung (10), die dazu konfiguriert ist, in einer kommunizierenden Art und Weise mit einer Mehrzahl von Vorrichtungen (60, 70, 80) einschließlich einer ersten Vorrichtung (60, 70) und einer zweiten Vorrichtung (70, 80) verbunden zu werden, wobei die Administrationsvorrichtung (10) aufweist:
eine Informationserfassungseinheit (12), die dazu konfiguriert ist, ein Informationserfassungsverfahren zum sequentiellen Erfassen von Information von der Mehrzahl von Vorrichtungen (60, 70, 80) durch sequentielles Stellen einer Anforderung nach der Information an die Mehrzahl von Vorrichtungen (60, 70, 80) auszuführen, wobei die Informationserfassungseinheit (12) konfiguriert ist zum:
Stellen einer Anforderung nach Zustandsinformation an die erste Vorrichtung (60. 70);
**gekennzeichnet durch**
(a) wenn die Zustandsinformation der ersten Vorrichtung (60) keinen Verfahrensausführzustand anzeigt, Stellen einer Anforderung nach Zielinformation, die eine andere ist als die Zustandsinformation, an die erste Vorrichtung (60), und Stellen einer Anforderung nach der Zustandsinformation an die zweite Vorrichtung (70), nachdem die Anforderung nach Zielinformation an die erste Vorrichtung (60) gestellt wurde; und
(b) wenn die Zustandsinformation der ersten Vorrichtung (70) den Verfahrensausführzustand anzeigt, Stellen der Anforderung nach Zustandsinformation an die zweite Vorrichtung (80) ohne die Anforderung nach Zielinformation an die erste Vorrichtung (70) zu stellen.

7. Administrationsvorrichtung (10) nach Anspruch 6, wobei
(a') wenn die Zustandsinformation der ersten Vorrichtung (60) keinen Verfahrensausfiihrzustand anzeigt und die Zustandsinformation der ersten Vorrichtung (60) keinen Schlafzustand anzeigt, die Informationserfassungseinheit die Anforderung nach Zielinformation an die erste Vorrichtung (60) stellt, und die Anforderung nach Zustandsinformation an die zweite Vorrichtung (70) stellt, nachdem sie die Anforderung nach Zielinformation an die erste Vorrichtung (60) gestellt hat.

8. Administrationsvorrichtung (10) nach Anspruch 6 oder 7, wobei
die erste Vorrichtung (60, 70) eine Druckfunktion aufweist, und
der Verfahrensausführzustand einen Druckausführzustand enthält.

9. Computerprogramm (36) für eine Administrationsvorrichtung (10), die konfiguriert ist zum Verbinden in einer kommunikativen Art und Weise mit einer Mehrzahl von Vorrichtungen (60, 70, 80) einschließlich einer ersten Vorrichtung (60, 70) und einer zweiten Vorrichtung (70, 80),
wobei das Computerprogramm (36) Anweisungen enthält zum Anweisen eines Computers, der an die Administrationsvorrichtung (10) angeschlossen ist, folgendes auszuführen:
ein Informationserfassungsverfahren zum sequentiellen Erfassen von Information von der Mehrzahl von Vorrichtungen (60, 70, 80) durch sequentielles Stellen einer Anforderung nach Information an die Mehrzahl von Vorrichtungen (60, 70, 80),
wobei das Informationserfassungsverfahren enthält:
Stellen einer Anforderung nach Zustandsinformation an die erste Vorrichtung (60, 70);
**gekennzeichnet durch**
(a) wenn die Zustandsinformation der ersten Vorrichtung (60) keinen Schlafzustand anzeigt, Stellen einer Anforderung nach Zielinformation, die eine andere ist als die Zustandsinformation, an die erste Vorrichtung (60), und Stellen einer Anforderung nach Zustandsinformation an die zweite Vorrichtung (70), nachdem sie die Anforderung nach der Zielinformation an die erste Vorrichtung (60) gestellt hat; und
(b) wenn die Zustandsinformation der ersten Vorrichtung (70) den Schlafzustand anzeigt, Stellen der Anforderung an die Zustandsinformation an die zweite Vorrichtung (80) ohne die Anforderung nach Zielinformation an die erste Vorrichtung (70) zu stellen.

10. Computerprogramm (36) für eine Administrationsvorrichtung (10), die dazu konfiguriert ist, in einer kommunizierenden Art und Weise mit einer Mehrzahl von Vorrichtungen (60, 70, 80) einschließlich einer ersten Vorrichtung (60, 70) und einer zweiten Vorrichtung (70, 80) verbunden zu werden,
wobei das Computerprogramm (36) Anweisungen zum Anweisen eines Computers, der an der Administrationsvorrichtung (10) angeschlossen ist, folgendes auszuführen:
ein Informationserfassungsverfahren zum sequentiellen Erfassen von Information von der Mehrzahl von Vorrichtungen (60, 70, 80) durch sequentielles Stellen einer Anforderung nach Information an die Mehrzahl von Vorrichtungen (60, 70, 80)
wobei das Informationserfassungsverfahren enthält:
Stellen einer Anforderung nach Zustandsinformation an die erste Vorrichtung (60, 70);
**gekennzeichnet durch**
(a) wenn die Zustandsinformation der ersten Vorrichtung (60) keinen Verfahrensausführzustand anzeigt, Stellen einer Anforderung nach Zielinformation, die eine andere ist als die Zustandsinformation, an die erste Vorrichtung (60), und Stellen einer Anforderung nach Zustandsinformation an die zweite Vorrichtung (70), nachdem sie die Anforderung nach Zielinformation an die erste Vorrichtung (60) gestellt hat; und
(b) wenn die Zustandinformation der ersten Vorrichtung (70) den Verfahrensausführzustand anzeigt, Stellen der Anforderung nach Zustandinformation an die zweite Vorrichtung (80) ohne die Anforderungen nach Zielinformation an die erste Vorrichtung (70) zu stellen.

## Revendications

1. Dispositif d'administration (10) configuré pour être relié d'une manière communicable à une pluralité de dispositifs (60, 70, 80) comprenant un premier dispositif (60, 70) et un deuxième dispositif (70, 80), le dispositif d'administration (10) comprenant :
une unité d'acquisition d'informations (12) configurée pour exécuter un processus d'acquisition d'informations afin d'acquérir de manière séquentielle des informations en provenance de la pluralité de dispositifs (60, 70, 80) en lançant de manière séquentielle une demande d'informations à la pluralité de dispositifs (60, 70, 80), dans lequel :
l'unité d'acquisition d'informations (12) est configurée pour :
lancer une demande d'informations d'état auprès du premier dispositif (60, 70) ;
**caractérisé par** :
(a) si les informations d'état du premier dispositif (60) n'indiquent pas un état de veille, lancer une demande d'informations cibles autres que les informations d'état auprès du premier dispositif (60), et lancer une demande d'informations d'état auprès du deuxième dispositif (70) après avoir lancé la demande d'informations cibles auprès du premier dispositif (60) ; et
(b) si les informations d'état du premier dispositif (70) indiquent l'état de veille, lancer la demande d'informations d'état auprès du deuxième dispositif (80) sans lancer la demande d'informations cibles auprès du premier dispositif (70).

2. Dispositif d'administration (10) selon la revendication 1, dans lequel :
(a') si les informations d'état du premier dispositif (60) n'indiquent pas l'état de veille et les informations d'état du premier appareil (60) n'indiquent pas un état d'exécution de processus, l'unité d'acquisition d'informations (12) lance la demande d'informations cibles auprès du premier dispositif (60), et lance la demande d'informations d'état auprès du deuxième dispositif (70) après avoir lancé la demande d'informations cibles auprès du premier dispositif (60).

3. Dispositif d'administration (10) selon la revendication 1 ou 2, dans lequel :
les informations cibles comprennent des informations (150, 152, 154, 156) qui sont modifiées tandis que le premier dispositif (60, 70) exécute un processus.

4. Dispositif d'administration (10) selon l'une quelconque des revendications 1 à 3, comprenant en outre :
une unité d'acquisition d'informations de période d'attente (12) ; et
une unité de réglage de cycle de temps (12) ;
dans lequel l'unité d'acquisition d'informations (12) est configurée pour exécuter le processus d'acquisition d'informations de manière périodique dans un cycle de temps prédéterminé (Pt1) ;
l'unité d'acquisition d'informations de période d'attente (12) acquiert, à partir de chacun de la pluralité de dispositifs (60, 70, 80), des informations relatives à une période d'attente (Wt), dans lequel la période d'attente (Wt) de chacun de la pluralité de dispositifs (60, 70, 80) est une période de temps à partir d'un instant où un état d'exécution de processus est terminé et jusqu'à une transition vers l'état de veille via un état d'attente ; et
l'unité de réglage de cycle de temps (12) règle le cycle de temps prédéterminé (Pt1) de façon à être égal à, ou plus court que, la plus courte d'une pluralité de périodes d'attente (Wt) de la pluralité de dispositifs (60, 70, 80).

5. Dispositif d'administration (10) selon l'une quelconque des revendications 1 à 3, comprenant en outre :
une unité de réglage de période d'attente (12) configurée pour envoyer, à la pluralité de dispositifs (60, 70, 80), une instruction de réglage pour régler une période d'attente (Wt) à une période de temps prédéterminée, dans lequel la période d'attente (Wt) est une période de temps à partir d'un instant où un état d'exécution de processus est terminé et jusqu'à une transition vers l'état de veille via un état d'attente ;
dans lequel l'unité d'acquisition d'informations (12) exécute de manière périodique le processus d'acquisition d'informations dans un cycle de temps prédéterminé (Pt1) qui est égal à, ou plus long que, la période de temps prédéterminée.

6. Dispositif d'administration (10) configuré pour être relié d'une manière communicable à une pluralité de dispositifs (60, 70, 80) comprenant un premier dispositif (60, 70) et un deuxième dispositif (70, 80), le dispositif d'administration (10) comprenant :
une unité d'acquisition d'informations (12) configurée pour exécuter un processus d'acquisition d'informations afin d'acquérir de manière séquentielle des informations en provenance de la pluralité de dispositifs (60, 70, 80) en lançant de manière séquentielle une demande d'informations à la pluralité de dispositifs (60, 70, 80), dans lequel :
l'unité d'acquisition d'informations (12) est configurée pour :
lancer une demande d'informations d'état auprès du premier dispositif (60, 70) ;
**caractérisé par** :
(a) si les informations d'état du premier dispositif (60) n'indiquent pas un état d'exécution de processus, lancer une demande d'informations cibles autres que les informations d'état auprès du premier dispositif (60), et lancer une demande d'informations d'état auprès du deuxième dispositif (70) après avoir lancé la demande d'informations cibles auprès du premier dispositif (60) ; et
(b) si les informations d'état du premier dispositif (70) indiquent l'état d'exécution de processus, lancer la demande d'informations d'état auprès du deuxième dispositif (80) sans lancer la demande d'informations cibles auprès du premier dispositif (70).

7. Dispositif d'administration (10) selon la revendication 6, dans lequel :
(a') si les informations d'état du premier dispositif (60) n'indiquent pas l'état d'exécution de processus et les informations d'état du premier appareil (60) n'indiquent pas un état de veille, l'unité d'acquisition d'informations lance la demande d'informations cibles auprès du premier dispositif (60), et lance la demande d'informations d'état auprès du deuxième dispositif (70) après avoir lancé la demande d'informations cibles auprès du premier dispositif (60).

8. Dispositif d'administration (10) selon la revendication 6 ou 7, dans lequel :
le premier dispositif (60, 70) comprend une fonction d'impression, et
l'état d'exécution de processus comprend un état d'exécution d'impression.

9. Programme informatique (36) pour un dispositif d'administration (10) configuré pour être relié d'une manière communicable avec une pluralité de dispositifs (60, 70, 80) comprenant un premier dispositif (60, 70) et un deuxième dispositif (70, 80) ;
le programme informatique (36) comprenant des instructions pour commander à un ordinateur monté sur le dispositif d'administration (10), d'exécuter :
un processus d'acquisition d'informations pour acquérir de manière séquentielle des informations en provenance de la pluralité de dispositifs (60, 70, 80) en lançant de manière séquentielle une demande d'informations à la pluralité de dispositifs (60, 70, 80) ;
dans lequel le processus d'acquisition d'informations comprend :
le lancement d'une demande d'informations d'état auprès du premier dispositif (60, 70) ;
**caractérisé par** :
(a) si les informations d'état du premier dispositif (60) n'indiquent pas un état de veille, le lancement d'une demande d'informations cibles autres que les informations d'état auprès du premier dispositif (60), et le lancement d'une demande d'informations d'état auprès du deuxième dispositif (70) après avoir lancé la demande d'informations cibles auprès du premier dispositif (60) ; et
(b) si les informations d'état du premier dispositif (70) indiquent l'état de veille, le lancement de la demande d'informations d'état auprès du deuxième dispositif (80) sans lancer la demande d'informations cibles auprès du premier dispositif (70).

10. Programme informatique (36) pour un dispositif d'administration (10) configuré pour être relié d'une manière communicable avec une pluralité de dispositifs (60, 70, 80) comprenant un premier dispositif (60, 70) et un deuxième dispositif (70, 80) ;
le programme informatique (36) comprenant des instructions pour commander à un ordinateur monté sur le dispositif d'administration (10), d'exécuter :
un processus d'acquisition d'informations pour acquérir de manière séquentielle des informations en provenance de la pluralité de dispositifs (60, 70, 80) en lançant de manière séquentielle une demande d'informations à la pluralité de dispositifs (60, 70, 80) ;
dans lequel le processus d'acquisition d'informations comprend :
le lancement d'une demande d'informations d'état auprès du premier dispositif (60, 70) ;
**caractérisé par** :
(a) si les informations d'état du premier dispositif (60) n'indiquent pas un état d'exécution de processus, le lancement d'une demande d'informations cibles autres que les informations d'état auprès du premier dispositif (60), et le lancement d'une demande d'informations d'état auprès du deuxième dispositif (70) après avoir lancé la demande d'informations cibles auprès du premier dispositif (60) ; et
(b) si les informations d'état du premier dispositif (70) indiquent l'état d'exécution de processus, le lancement de la demande d'informations d'état auprès du deuxième dispositif (80) sans lancer la demande d'informations cibles auprès du premier dispositif (70).
